(19) Europäisches Patentamt
European Patent Office
Office européen des brevets

(11) Veröffentlichungsnummer: **0 121 875**
**A2**

# (12) EUROPÄISCHE PATENTANMELDUNG

(21) Anmeldenummer: **84103518.1**

(22) Anmeldetag: **30.03.84**

(51) Int. Cl.³: **D 06 P 5/17**, C 09 B 29/08
// D06P1/16

(30) Priorität: **07.04.83 DE 3312488**

(43) Veröffentlichungstag der Anmeldung: **17.10.84**
**Patentblatt 84/42**

(84) Benannte Vertragsstaaten: **BE CH DE FR GB IT LI**

(71) Anmelder: **BASF Aktiengesellschaft,**
**Carl-Bosch-Strasse 38, D-6700 Ludwigshafen (DE)**

(72) Erfinder: **Bergmann, Udo, Dr., Merckstrasse 26,**
**D-6100 Darmstadt (DE)**
Erfinder: **Dix, Johannes Peter, Dr., Ludwigshafener Strasse 125, D-6708 Neuhofen (DE)**
Erfinder: **Hansen, Guenter, Dr., Alwin-Mittasch-Platz 8, D-6700 Ludwigshafen (DE)**
Erfinder: **Weber, Hans, Im Wachtelschlag 33,**
**D-6733 Hassloch (DE)**

## (54) Verfahren zur Herstellung alkalisch ätzbarer Färbungen und Drucke.

(57) Die Erfindung betrifft ein Verfahren zur Herstellung alkalisch ätzbarer Färbungen und Drucke, das dadurch gekennzeichnet ist, daß man als Farbstoffe Verbindungen der allgemeinen Formel I

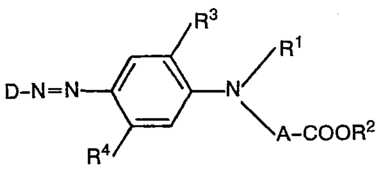

I

verwendet, in der D ein Rest der Formel

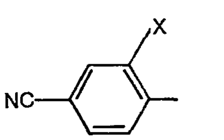

,

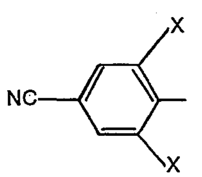

,

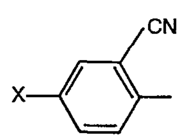

,

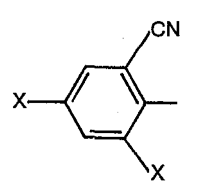

,

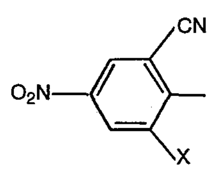

,

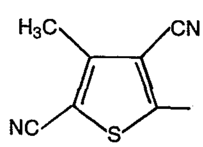

,

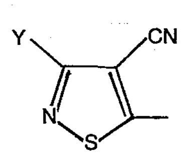

,

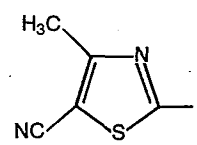

oder

EP 0 121 875 A2

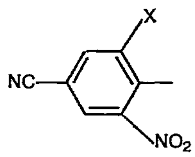,

X Chlor oder Brom,
Y Wasserstoff, $C_1$–$C_6$-Alkyl, $C_2$- oder $C_3$-Alkenyl, gegebenenfalls durch Chlor, Brom, Nitro, Methyl, Ethyl, Methoxy oder Ethoxy substituiertes Benzyl oder gegebenenfalls durch Chlor, Brom, Nitro, Methyl, Ethyl, Methoxy oder Ethoxy substituiertes Phenyl,
A ein Alkylenrest,
$R^1$ Wasserstoff, gegebenenfalls substituiertes $C_1$–$C_6$-Alkyl, Alkenyl oder Aralkyl,
$R^2$ gegebenenfalls substituiertes Alkyl, Cycloalkyl, Alkenyl, Aralkyl oder Aryl,
$R^3$ Wasserstoff, Fluor, Chlor, Brom, Methyl, Ethyl, Methoxy, Ethoxy oder Phenoxy und
$R^4$ Wasserstoff, Chlor, Brom, Methyl, Ethyl, Methoxy, Ethoxy oder C-Acylamino sind.

# Verfahren zur Herstellung alkalisch ätzbarer Färbungen und Drucke

Die Erfindung betrifft ein Verfahren zur Herstellung alkalisch ätzbarer Färbungen und Drucke, das dadurch gekennzeichnet ist, daß man als Farbstoffe Verbindungen der allgemeinen Formel I

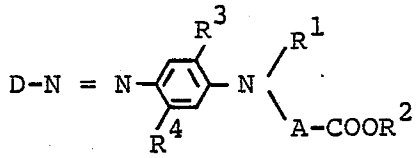 I

verwendet, in der

D ein Rest der Formel

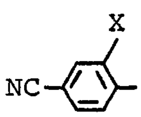 , 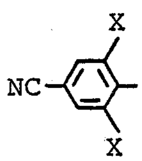 , 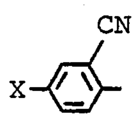 , 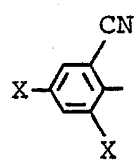 , 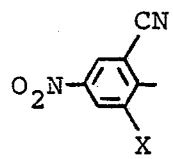 ,

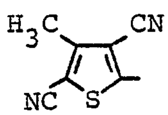 , 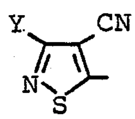 , 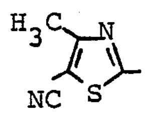 oder 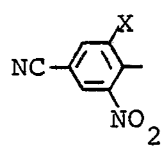 ,

X Chlor oder Brom,

Y Wasserstoff, $C_1$-$C_6$-Alkyl, $C_2$- oder $C_3$-Alkenyl, gegebenenfalls durch Chlor, Brom, Nitro, Methyl, Ethyl, Methoxy oder Ethoxy substituiertes Benzyl oder gegebenenfalls durch Chlor, Brom, Nitro, Methyl, Ethyl, Methoxy oder Ethoxy substituiertes Phenyl,

A ein Alkylenrest,

$R^1$ Wasserstoff, gegebenenfalls substituiertes $C_1$-$C_6$-Alkyl, Alkenyl oder Aralkyl,

$R^2$ gegebenenfalls substituiertes Alkyl, Cycloalkyl, Alkenyl, Aralkyl oder Aryl,

$R^3$ Wasserstoff, Fluor, Chlor, Brom, Methyl, Ethyl, Methoxy, Ethoxy oder Phenoxy und

Bg/P

$R^4$ Wasserstoff, Chlor, Brom, Methyl, Ethyl, Methoxy, Ethoxy oder C-Acylamino sind.

Alkylenreste A sind z. B.:

$-CH_2-\underset{CH_3}{\underset{|}{CH}}-$ oder $-\underset{CH_3}{\underset{|}{CH}}-CH_2-$, insbesondere $-CH_2-$ oder $-\underset{CH_3}{\underset{|}{CH}}-$ und vorzugsweise $-C_2H_4-$.

C-Acylaminoreste $R^4$ entsprechen der Formel $NHCOR^5$, wobei $R^5$ z. B. $C_1$- bis $C_6$-Alkyl, das noch durch Hydroxy, Chlor, Brom, Methoxy, Ethoxy, Cyan, $C_1$- bis $C_4$-Alkoxyethoxy, $C_1$- bis $C_4$-Alkoxymethylethoxy, $C_1$- bis $C_4$-Alkoxyethylethoxy, Phenoxy, $C_1$-$C_6$-Alkoxycarbonyloxy, $C_1$- bis $C_6$-Alkylaminocarbonyloxy, Phenylaminocarbonyloxy oder $C_1$- bis $C_6$-Alkanoyloxy substituiert sein kann, Cyclohexyl, Furfuryl, Tetrahydrofurfuryl, Allyl, Methallyl, Benzyl, Phenethyl oder gegebenenfalls durch Chlor, Brom, Methyl, Ethyl, Nitro, Methoxy oder Ethoxy substituiertes Phenyl sowie Amino oder Mono- oder Di-$C_1$- bis $C_4$-Alkylamino ist.

Einzelne Reste $R^5$ sind neben den bereits genannten z. B.: Methyl, Ethyl, Propyl, Butyl, Pentyl, Hexyl, Hydroxyethyl, Chlorethyl, Bromethyl, Cyanmethyl, Methoxymethyl, Phenyl, o-, m-, p-Tolyl, o-, m-, p-Methoxyphenyl, o-, m-, p-Chlorphenyl oder o-, m-, p-Nitrophenyl.

Bevorzugt für $R^5$ sind:
$C_3$- bis $C_6$-Alkyl und insbesondere $CH_3$ oder $C_2H_5$.

Für $R^1$ und $R^2$ sind im Rahmen der allgemeinen Definition die gleichen Reste wie für $R^5$ zu nennen, für $R^1$ darüber hinaus durch $C_1$- bis $C_6$-Alkoxycarbonyl substituiertes $C_1$- oder $C_2$-Alkyl, z. B. Methoxycarbonylethyl, Ethoxycarbonylethyl, n- oder i-Propoxycarbonylethyl, n- oder i-Butoxycarbonylethyl, Methoxycarbonylmethyl oder Ethoxycarbonylmethyl.

Die Herstellung der Farbstoffe erfolgt wie üblich nach an sich bekannten Methoden.

Als Ätzverfahren sind ebenfalls die bekannten, z. B. die in der GB-PS 1543724 und der GB-A 2071707 beschriebenen mit alkalisch wirkenden Mitteln arbeitenden Methoden brauchbar. Einige repräsentative Verfahren sind in den Beispielen angegeben, in denen sich Angaben über Teile und Prozente, sofern nicht anders vermerkt, auf das Gewicht beziehen.

Bevorzugt ist die Verwendung von Verbindungen der Formel I a

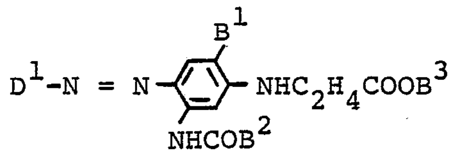

I a,

in der

$D^1$ einen Anilin- oder Thiophenrest,

$B^1$ Wasserstoff, Methyl, Chlor, Methoxy oder Ethoxy,

$B^2$ Methyl oder Ethyl und

$B^3$ Methyl, Ethyl, n- und i-Propyl, n-, i-, sek.- und tert.-Butyl, Hydroxyethyl, 2-Hydroxypropyl, 3-Hydroxypropyl, 4-Hydroxybutyl, Cyanmethyl, Methoxyethyl, Ethoxyethyl, n- und i-Propoxyethyl, n- und i-Butoxyethyl, Phenoxyethyl, Benzyl, Phenethyl, Allyloxyethyl, Benzyloxyethyl, Methoxyethoxyethyl oder Ethoxyethoxyethyl sind.

Beispiel 1

40 Teile des Farbstoffs der Formel

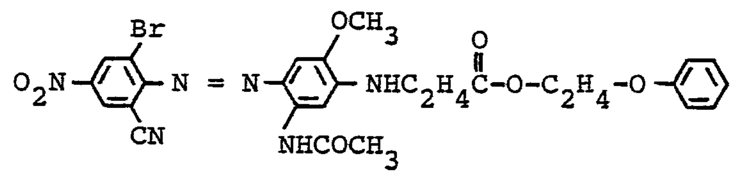

werden in feiner Verteilung zu einer Klotzflotte gegeben, die 930 Teile Wasser, 10 Teile Mononatriumphosphat, 10 Teile Natriumchlorat und 10 Teile eines Polymerisationsproduktes auf Polyacrylsäurebasis enthält. Man präpariert ein Polyestergewebe mit dieser Klotzflotte auf einem Foulard und trocknet bei 110 °C.

Anschließend wird das Gewebe auf einer Flachfilmdruckmaschine mit einer Druckpaste bedruckt, die 300 Teile einer 10%igen wäßrigen Kernmehletherverdickung, 300 Teile einer Stärkeetherverdickung (10 %ig), 100 Teile Polyethylenglykol (Molgewicht 300), 80 Teile Pottasche und 220 Teile Wasser enthält.

Nach dem Trocknen bei 130 °C wird 8 Minuten bei 175 °C mit überhitztem Dampf fixiert, danach reduktiv gereinigt, gespült und getrocknet. Man erhält einen marineblauen Druck mit guten Echtheiten. An den Stellen, auf die die pottaschehaltige Druckpaste aufgedruckt wurde, erhält man einen sehr guten Weißfond mit scharfen Konturen.

Beispiel 2

Anstelle von 40 Teilen des Farbstoffs von Beispiel 1 werden 40 Teile des Farbstoffs der Formel

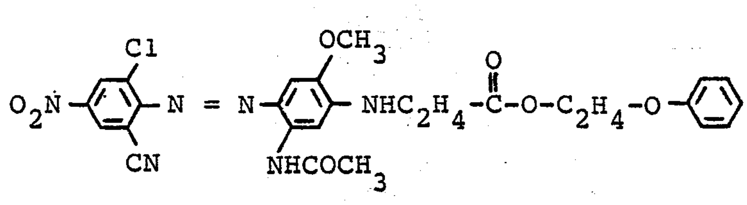

verwendet und im übrigen so verfahren, wie im Beispiel 1 beschrieben. Man erhält einen blauen Druck mit guten Echtheiten und an den geätzten Stellen einen sehr guten Weißfond mit scharfen Konturen.

Beispiel 3

Man bedruckt ein Polyestergewirke mit einer Druckpaste, die 600 Teile einer 10 %igen Kernmehletherverdickung, 80 Teile Natronlauge (38 $^{\circ}$ Bé), 50 Teile Glyzerin, 50 Teile Polyethylenglykol (Molgewicht 400) und 120 Teile Wasser enthält, mit einer gemusterten Rotationsfilmdruckschablone. Im gleichen Arbeitsgang wird mit einer zweiten Schablone, die vollflächig offen ist, mit einer Druckpaste überdruckt, welche 30 Teile des Farbstoffs der Formel

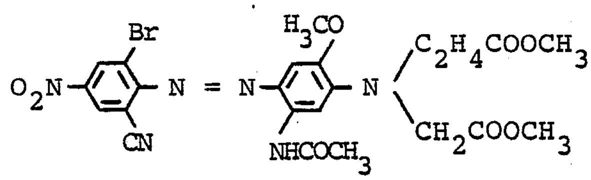

in feinverteilter Form, 7 Teile Mononatriumphosphat, 10 Teile Natriumchlorat, 550 Teile einer Stärkeetherverdickung (10 %ig) und 403 Teile Wasser enthält.

Nach dem Trocknen bei 110 $^{\circ}$C wird 9 Minuten bei 170 $^{\circ}$C mit überhitztem Dampf fixiert, danach reduktiv gereinigt, gespült und getrocknet.

Es resultiert ein dunkelblauer Druck mit guten Echtheiten, der an den mit der natronlaugehaltigen Paste vorgedruckten Stellen weiße Muster mit scharfem Stand aufweist.

Beispiel 4

30 Teile des Farbstoffs der Formel

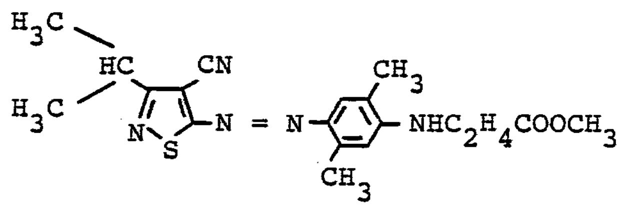

werden in feinverteilter Form in eine Klotzflotte gegeben, die 940 Teile Wasser, 5 Teile Mononatriumphosphat, 10 Teile Natriumchlorat und 15 Teile eines Polymerisationsproduktes auf Acrylsäurebasis als Antimigrationsmittel enthält. Nach dem Trocknen wird mit einer Druckpaste, die 400 Teile einer wäßrigen 10 %igen Kernmehletherverdickung, 200 Teile einer wäßrigen 10 %igen Stärkeetherverdickung, 150 Teile Wasserglas, 50 Teile Glyzerin, 50 Teile Polyethylenglykol (Molgewicht 300) und 150 Teile Wasser enthält, überdruckt.

Nach dem Trocknen bei 110 °C wird 8 Minuten bei 175 °C mit überhitztem Dampf fixiert, anschließend reduktiv gereinigt, gespült und getrocknet.

Es resultiert ein roter Druck mit sehr guten Echtheiten und mit einem an den geätzten Stellen sehr guten Weißfond mit scharfen Konturen.

Beispiel 5

Anstelle von 30 Teilen des Farbstoffs von Beispiel 4 werden 30 Teile des Farbstoffs der Formel

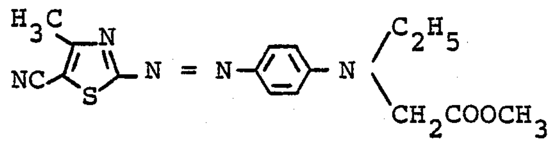

verwendet und im übrigen so verfahren, wie in Beispiel 4 angegeben. Man erhält einen roten Druck mit guten coloristischen Eigenschaften und an den geätzten Stellen einen sehr guten Weißfond mit scharfen Konturen.

Analog den Beispielen 1-5 erhält man ebenfalls durch Alkali weiß ätzbare Drucke mit sehr guten coloristischen Eigenschaften, wenn die in der nachfolgenden Tabelle gekennzeichneten Farbstoffe verwendet werden.

$D-N=N-K$

| Bsp. Nr. | D | K | Farbton auf Polyester |
|---|---|---|---|
| 6 | 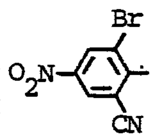 | 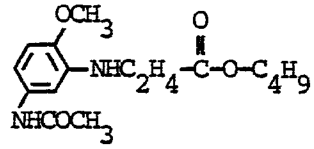 (n) | marineblau |
| 7 | 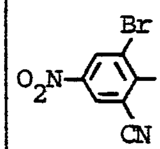 | 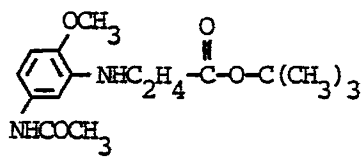 | marineblau |
| 8 | 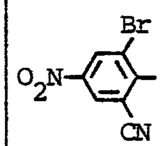 | 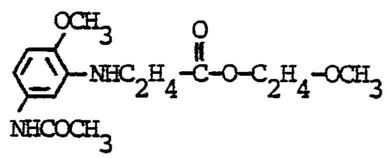 | marineblau |
| 9 | 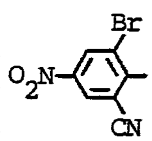 | 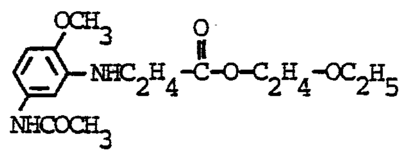 | marineblau |
| 10 | 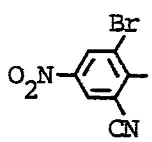 | 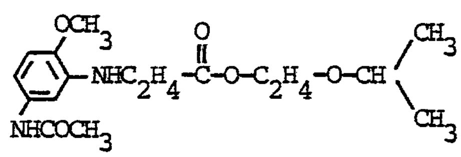 | marineblau |
| 11 | 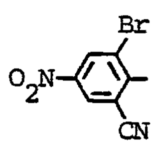 | 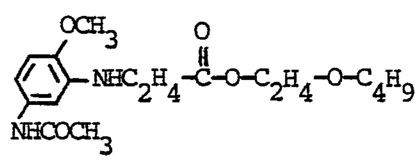 (n) | marineblau |

| Bsp. Nr. | D | K | Farbton auf Polyester |
|---|---|---|---|
| 12 | 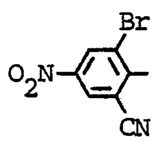 | 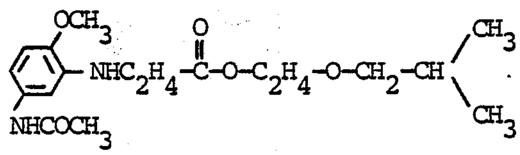 | marineblau |
| 13 | 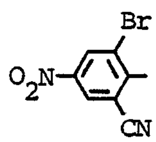 | 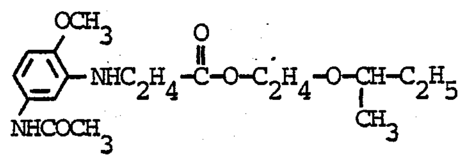 | marineblau |
| 14 | 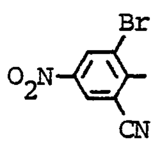 | 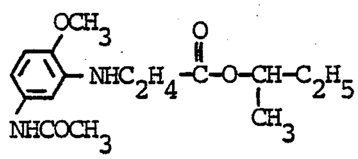 | marineblau |
| 15 | 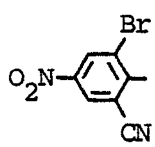 | 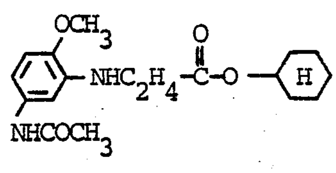 | marineblau |
| 16 | 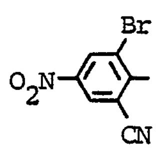 | 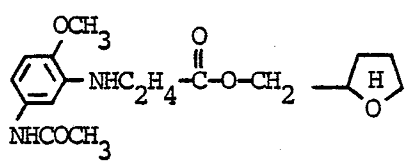 | marineblau |
| 17 | 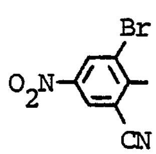 | 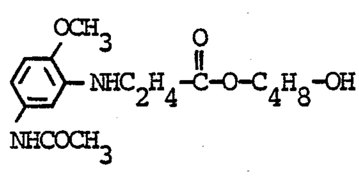 | marineblau |

| Bsp. Nr. | D | K | Farbton auf Polyester |
|---|---|---|---|
| 18 | 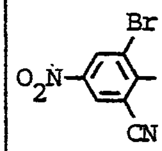 | 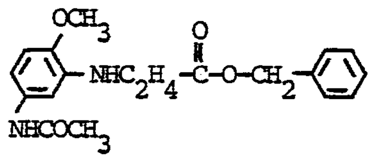 | marineblau |
| 19 | 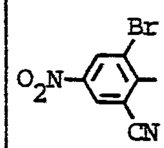 | 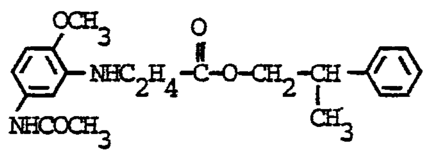 | marineblau |
| 20 | 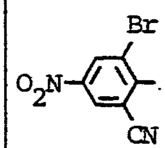 | 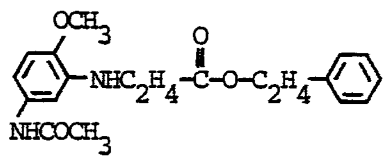 | marineblau |
| 21 | 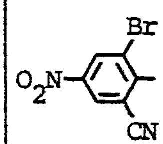 | 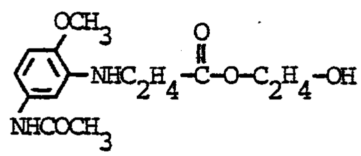 | marineblau |
| 22 | 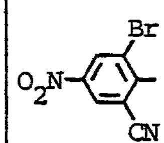 | 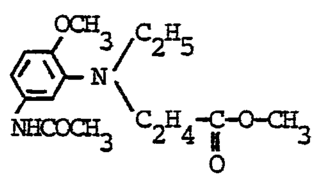 | marineblau |
| 23 | 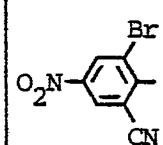 | 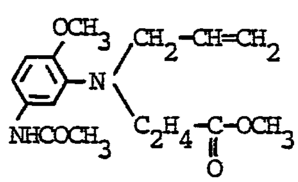 | marineblau |

| Bsp. Nr. | D | K | Farbton auf Polyester |
|---|---|---|---|
| 24 | 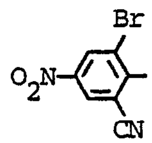 | 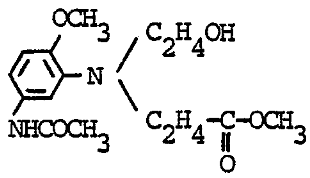 | marineblau |
| 25 | 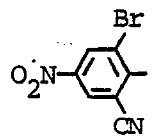 | 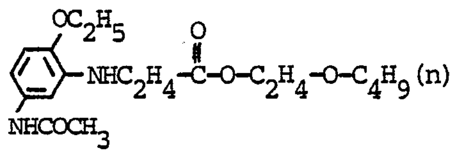 | marineblau |
| 26 | 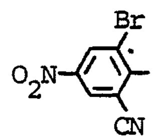 | 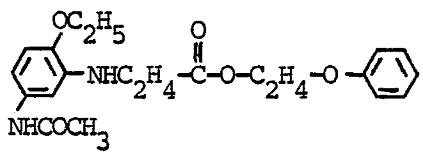 | marineblau |
| 27 | 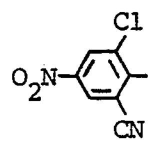 | 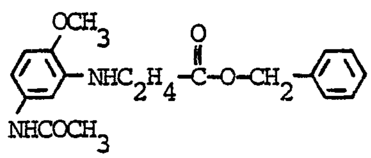 | marineblau |
| 28 | 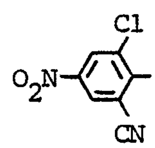 | 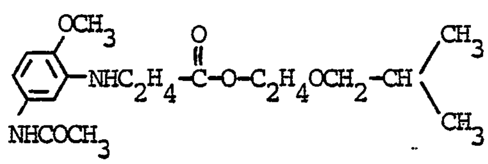 | marineblau |
| 29 | 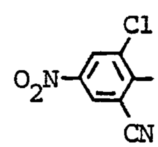 | 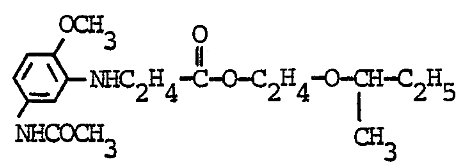 | marineblau |

| Bsp. Nr. | D | K | Farbton auf Polyester |
|---|---|---|---|
| 30 | 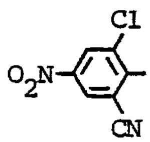 | 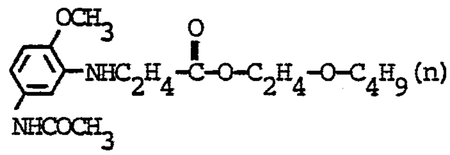 | marineblau |
| 31 | 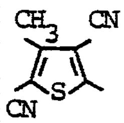 | 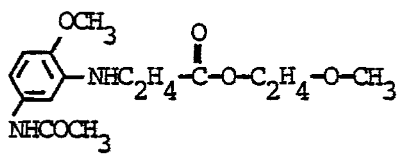 | marineblau |
| 32 | 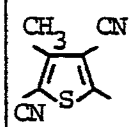 | 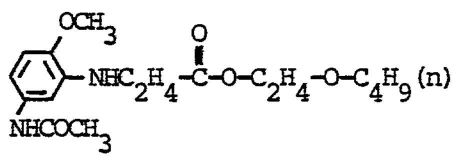 | marineblau |
| 33 | 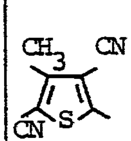 | 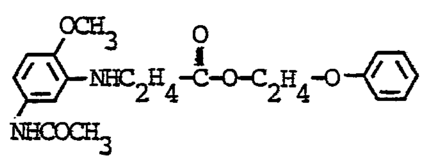 | marineblau |
| 34 | 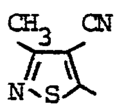 | 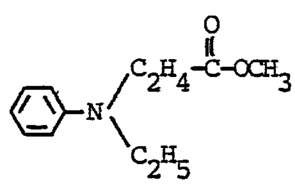 | rot |
| 35 | 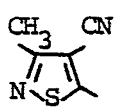 | 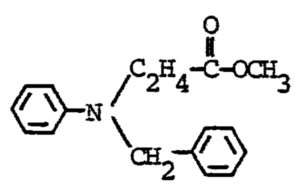 | rot |

| Bsp. Nr. | D | K | Farbton auf Polyester |
|---|---|---|---|
| 36 | 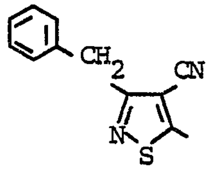 | 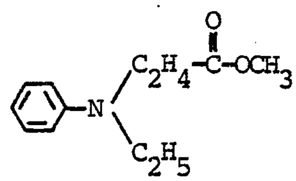 | rot |
| 37 | 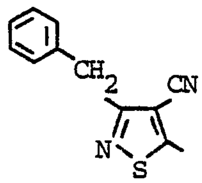 | 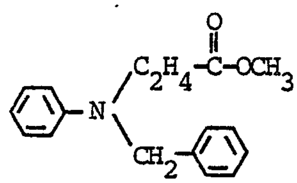 | rot |
| 38 | 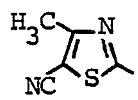 | 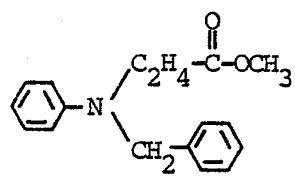 | rot |
| 39 | 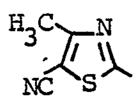 | 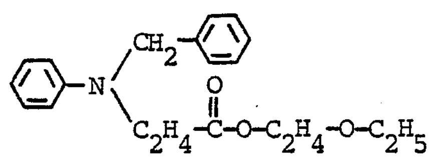 | rot |
| 40 | 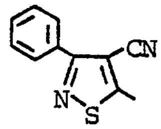 | 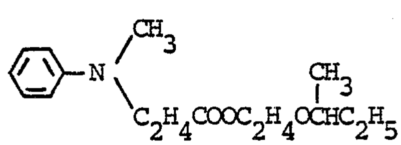 | rot |

| Bsp. Nr. | D | K | Farbton auf Polyester |
|---|---|---|---|
| 41 | 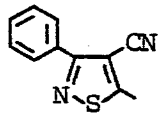 | 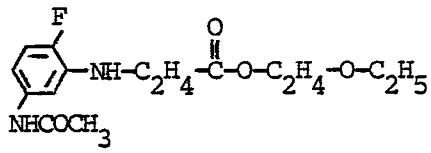 | rot |
| 42 | 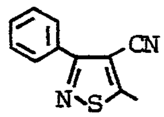 | 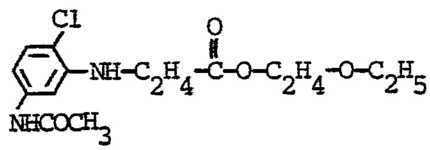 | rot |
| 43 | 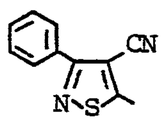 | 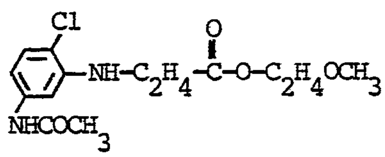 | rot |
| 44 | 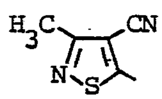 | 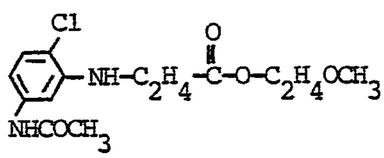 | rot |
| 45 | 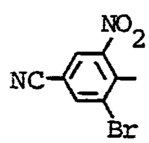 | 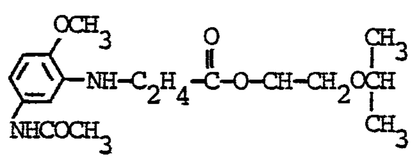 | blauviolett |
| 46 | 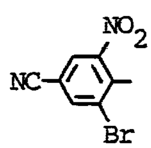 | 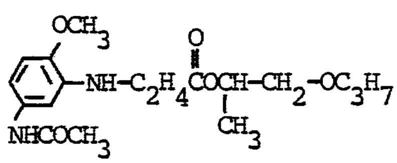 | blauviolett |
| 47 | 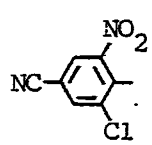 | 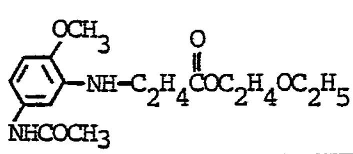 | blauviolett |

| Bsp. Nr. | D | K | Farbton auf Polyester |
|---|---|---|---|
| 48 | 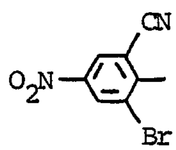 | 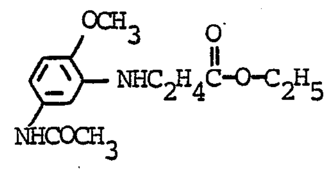 | marineblau |
| 49 | 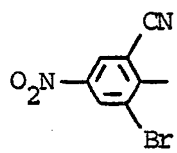 | 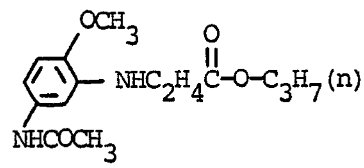 | marineblau |
| 50 | 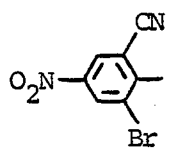 | 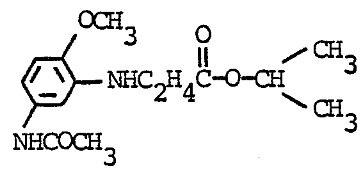 | marineblau |
| 51 | 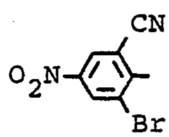 | 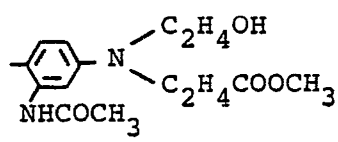 | dunkelblau |
| 52 | 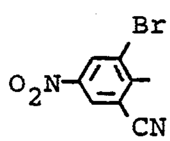 | 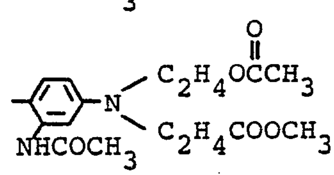 | dunkelblau |
| 53 | 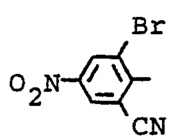 | 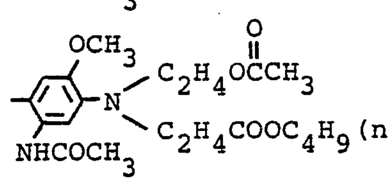 | marineblau |
| 54 | 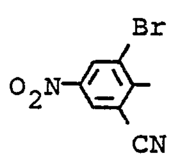 | 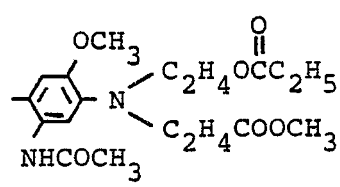 | marineblau |

| Bsp. Nr. | D | K | Farbton auf Polyester |
|---|---|---|---|
| 55 | 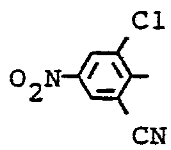 | 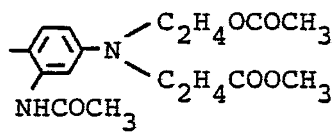 | dunkelblau |
| 56 | 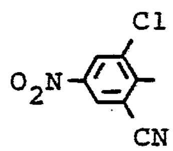 | 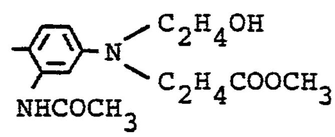 | dunkelblau |

Patentansprüche

1. Verfahren zur Herstellung alkalisch ätzbarer Färbungen und Drucke, dadurch gekennzeichnet, daß man als Farbstoffe Verbindungen der allgemeinen Formel I

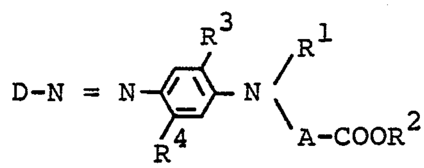 I

verwendet, in der

D ein Rest der Formel

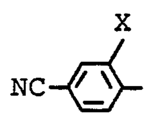 , 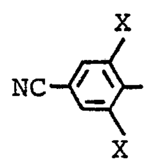 , 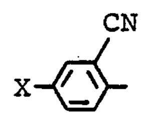 , 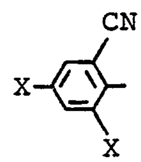 , 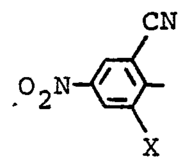 ,

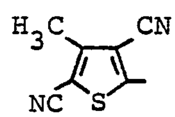 , 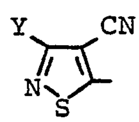 , 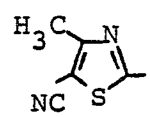 oder 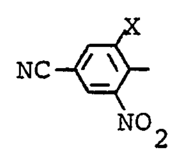 ,

X Chlor oder Brom,

Y Wasserstoff, $C_1$-$C_6$-Alkyl, $C_2$- oder $C_3$-Alkenyl, gegebenenfalls durch Chlor, Brom, Nitro, Methyl, Ethyl, Methoxy oder Ethoxy substituiertes Benzyl oder gegebenenfalls durch Chlor, Brom, Nitro, Methyl, Ethyl, Methoxy oder Ethoxy substituiertes Phenyl,

A ein Alkylenrest,

$R^1$ Wasserstoff, gegebenenfalls substituiertes $C_1$-$C_6$-Alkyl, Alkenyl oder Aralkyl,

$R^2$ gegebenenfalls substituiertes Alkyl, Cycloalkyl, Alkenyl, Aralkyl oder Aryl,

$R^3$ Wasserstoff, Fluor, Chlor, Brom, Methyl, Ethyl, Methoxy, Ethoxy oder Phenoxy und

$R^4$ Wasserstoff, Chlor, Brom, Methyl, Ethyl Methoxy, Ethoxy oder C-Acylamino sind.

2. Verfahren gemäß Anspruch 1, <u>dadurch gekennzeichnet</u>, daß man Verbindungen der Formel

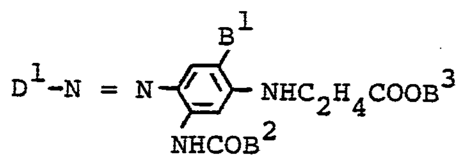

verwendet,
in der
$D^1$ ein Anilin- oder Thiophenrest,
$B^1$ Wasserstoff, Methyl, Chlor, Methoxy oder Ethoxy,
$B^2$ Methyl oder Ethyl und
$B^3$ Methyl, Ethyl, n- und i-Propyl, n-, i-, sek.- und tert.-Butyl, Hydroxyethyl, 2-Hydroxypropyl, 3-Hydroxypropyl, 4-Hydroxybutyl, Cyanmethyl, Methoxyethyl, Ethoxyethyl, n- und i-Propoxyethyl, n- und i-Butoxyethyl, Phenoxyethyl, Benzyl, Phenethyl, Allyloxyethyl, Benzyloxyethyl, Methoxyethoxyethyl oder Ethoxyethoxyethyl sind.

3. Verfahren gemäß Anspruch 1, wobei
D 2-Cyan-4-nitro-6-bromphenyl oder 2-Cyan-4-nitro-6-chlorphenyl ist.

4. Verfahren gemäß Anspruch 1, wobei
A $C_2H_4$, $\underset{CH_3}{CH}-CH_2$ oder $CH_2\underset{CH_3}{CH}$ ist.

5. Verfahren gemäß Anspruch 1, wobei
$R^1$ Wasserstoff, $C_2H_4OH$, $C_3H_6OH$ oder $C_2H_4O$ Acyl ist, wobei Acyl $C_2$- bis $C_4$-Alkanoyl ist.

6. Verfahren gemäß Anspruch 1, wobei $R^2$ $C_1$- bis $C_4$-Alkyl, Benzyl, Cyclohexyl, Phenoxyethyl oder $C_1$- bis $C_4$-Alkoxyethyl ist.

7. Verfahren gemäß Anspruch 1, wobei $R^3$ Wasserstoff, Methyl oder Methoxy ist.

8. Verfahren gemäß Anspruch 1, wobei $R^4$ $C_1$- bis $C_4$-Alkanoylamino oder Benzoylamino ist.